# EUROPEAN PATENT APPLICATION

(11) **EP 4 503 231 A1**
(43) Date of publication of application: **05.02.2025**
(21) Application number: 23781242.5
(22) Date of filing: 23.03.2023
(51) Int. Cl.: H01M 10/0567, H01M 10/0568, H01M 10/0569, H01M 10/052

(54) **ELECTROLYTE ADDITIVE FOR LITHIUM ION BATTERY, ELECTROLYTE COMPRISING SAME, AND LITHIUM ION BATTERY COMPRISING SAME**

(30) Priority: 28.03.2022 KR 20220037980
(71) Applicant: Seoul National University R&DB Foundation, Seoul 08826 (KR); University Of Fribourg, 1700 Fribourg (CH)
(72) Inventor: CHOI, Jang Wook, Seoul 06737 (KR); COSKUN, Ali, 1752 Villars-sur-Glane (CH); ZHAO, Yan, 1700 Fribourg (CH); ZHOU, Tianhong, 1700 Fribourg (CH)
(74) Representative: Nederlandsch Octrooibureau
(86) International application number: PCT/KR2023/003882
(87) International publication number: WO 2023/191386

(57) **Abstract**

The electrolyte additive for a lithium-ion battery has a minimum electrostatic potential (ESP) of -151 kJ mol-1 to -100 kJ mol-1.

## Description

### [Technical Field]

The present invention relates to an electrolyte additive for a lithium-ion battery, an electrolyte including the same, and a lithium-ion battery including the same.

### [Background Art]

The successful commercialization and widespread application of ion batteries (LIBs) have had a profound impact on our daily lives, from portable electronics to electric vehicles to smart grids.

While the demand for high energy density LIB has increased significantly in recent years, existing LIBs based on graphite anodes (372 mAh g-1) seem to have reached their limits in terms of energy storage capacity, so they cannot keep up with this demand. In this situation, lithium metal is considered the ultimate positive electrode due to its low density (0.59 g cm-3), low electrode potential (-3.04V vs. standard hydrogen electrode), and extremely high energy density (3,860mAh g-1).

This is because the energy density (500Wh kg-1) can be doubled compared to the current LIB when paired with a high voltage negative electrode material such as LiNixCoyMn1-x-yO2 (Ni-rich NCM, Ni≥60 %). However, the lithium metal positive electrode (LMA) particularly has thermodynamic instability with respect to carbonate, and causes problems such as lithium metal and electrolyte consumption, non-uniform and mechanically weak solid electrolyte interface (SEI) and lithium dendrite formation, and thus, low cycle life and coulombic efficiency.

The SEI layer on the surface of the lithium metal anode obtained by reduction of the solvent and the lithium salt can stabilize the lithium metal anode by minimizing contact with the electrolyte and side reactions. However, the organic rich SEI layer containing RCO2Li arising from carbonates results in a large volume change of the lithium metal anode due to its strong interaction with the lithium metal anode surface and low interfacial energy, and unavoidable cracking of the surface during cycling and eventually reducing the coulombic efficiency.

That is, the carbonate electrolyte has been successfully applied to existing LIBs due to the compatibility of the graphite anode and the organic material-rich SEI under a small volume change (^{~}13%) during (di)intercalation, but low CE (<90%) and lithium filament formation in the carbonate electrolyte is problematic due to the formation of a porous thick and fragile SEI layer having a low shear modulus of less than 1GPa when paired with a lithium metal anode.

This is due to the presence of lithium alkyl carbonate (ROCO2Li) in the reduction of the solvent, and it is very important to control the thickness, composition, and characteristics of the SEI in applying the lithium metal anode to the LIB, accordingly.

As additives that are materials added to the carbonate electrolyte, ionic liquids, fluoroethylene carbonate (FEC), vinylene carbonate (VC), amide derivatives, and the like have been studied. Such additives have been studied to promote the formation of an inorganic-rich SEI layer containing LiF and Li2CO3 to improve the CE stability of carbonate electrolytes. However, organic by-products resulting from the decomposition of additives are still problematic.

Compared to carbonate based electrolytes, ether based electrolytes are more stable, suitable for Li anodes, and promote the formation of Li20, which is thicker and has less Dentrite phase.

However, the use of an ether-based electrolyte in the high voltage LMB is problematic due to low cathode stability (<4V). That is, although improved CE can be obtained, it is difficult to maintain stability for a long cycle due to the formation of organolithium alkoxy (ROLi) species. Therefore, there is a need to develop new electrolyte additives to optimize the SEI layer composition and improve CE stability.

### [Disclosure]

### [Technical Problem]

Accordingly, an object of the present invention is to provide a new electrolyte material and composition for a Lithium Metal Anode (LMA) battery, optimizing the SEI layer and achieving CE stability.

### [Technical Solution]

According to an aspect of the present invention, there is provided an electrolyte additive for a lithium-ion battery, wherein the electrolyte additive has a minimum electrostatic potential (ESP) of about -151 kJ mol-1 to about -100 kJ mol-1.

In one example of the present invention, the anode of the lithium-ion battery above includes a lithium metal.

The electrolyte additive may include at least one selected from the group consisting of bis(2,2,2-trifluoroethoxy)methane (BTFM), 1,1,1-trifluoro-2-methoxyethane, bis(2,2,3,3-pentafluoropropoxy)methane, and 1,1,1,3,3,3-hexafluoro-2-((2,2,2-trifluoroethoxy)methoxy)propane.

The present invention provides an electrolyte for a lithium-ion battery including the electrolyte additive for a lithium-ion battery described above.

In an exemplary embodiment of the present invention, the electrolyte for a lithium-ion battery includes: the additive described above; an electrolyte salt; and an ether-based or carbonate-based solvent.

In one embodiment of the present invention, the additive includes at least one selected from the group consisting of bis(2,2,2-trifluoroethoxy)methane (BTFM), 1,1,1-trifluoro-2-methoxyethane, bis(2,2,3,3,-pentafluoropropoxy)methane, and 1,1,1,3,3,3-hexafluoro-2-((2,2,2-trifluoroethoxy)methoxy)propane, and the volume ratio of the additive and the solvent is 8:1 to 1:1.

The electrolyte salt may be lithium bis(fluorosulfonyl)imide (LiFSI), and the anode of the lithium-ion battery may be lithium metal.

The present invention also provides a lithium-ion battery including the electrolyte additive described above, and in an exemplary embodiment of the present invention, the additive is bis(2,2,2-trifluoroethoxy)methane (BTFM).

Li2O dominates the SEI layer of the lithium-ion battery, and an electrolyte salt of the electrolyte of the lithium-ion battery is (lithium bis(fluorosulfonyl)imide (LiFSI)).

In one embodiment of the present invention, the solvent of the electrolyte is 1,2-dimethoxyethane (1,2-dimethoxyethane, DME).

### [Advantageous Effects]

The present invention provides the electrolyte additive characterized in that the minimum electrostatic potential (ESP) of the electrolyte additive is -150-151 kJ mol-1 to -1200 kJ mol-1. That is, a component including a minimum electrostatic potential (ESP) of -151 kJ mol-1 to -100 kJ mol-1 was used as an electrolyte, thereby achieving a very high Li2O content (63%) in SEI with uniform phase distribution. In addition, high coulombic efficiency (CE) of 99.72% is possible together with mechanical stability, and excellent capacity maintenance is possible at 1C (1C=1.6mA cm-2) in a Li|LiNi0.8Co0.1Mn0.1O2 (NCM811) complete cell including a negative/positive capacity (N/P) ratio of 2.5 and a complete cell without a Cu|NCM811 anode. Therefore, the electrolyte additive according to the present invention is expected to greatly contribute to the commercialization of conventional lithium metal anode-based batteries.

### [Brief Description of Drawings]

FIG. 1 is a diagram illustrating a method of classifying a minimum electrostatic potential (ESP) value.
FIG. 2 is a diagram illustrating a minimum electrostatic potential (ESP) of an additive according to an embodiment of the present invention.
FIG. 3 is a structural diagram of bis(2,2,2-trifluoroethoxy)methane (BTFM) and 1,2-dimethoxyethane (DME) according to an embodiment of the present invention.
FIG. 4 is a result of analyzing coulombic efficiency of an electrolyte (1M LiFSI-DME), a 1M LiFSI-7BTFM-1DME electrolyte (Example 1), and a 2M LiFSI-3BTFM-1DME electrolyte (Example 2) in which BTFM is not mixed according to the present invention.
FIG. 5 shows the coulombic efficiency of previously reported electrolytes.
FIG. 6 shows the results of evaluation of the Li|Cu half-cell cycle characteristics using an electrolyte (1M LiFSI-DME, Comparative Example) without mixing BTFM according to the present invention, a 1M LiFSI-7BTFM-1DME electrolyte (Example 1), and a 2M LiFSI-3BTFM-1DME electrolyte (Example 2) (current density 1 mA cm-2, capacity 1 mAh cm-2).
FIG. 7 shows a result of evaluation of cycle characteristics of the half-cell of FIG. 6 under different conditions (current density 2 mA cm-2, capacity 3 mAh cm-2).
FIG. 8 shows evaluation results of oxidation stability in a half cell of LilAl of three kinds of electrolytes measured by a linear scanning potential method.
FIGS. 9 to 11 are SEM images of lithium electrodeposition on a copper surface after the first cycle of the electrolytes according to Comparative Example and Examples 1 and 2, respectively.
FIGS. 12 to 14 are SEM images of lithium electrodeposition shapes on copper surfaces after the 20th cycle of the electrolytes according to Comparative Example and Examples 1 and 2, respectively.
FIGS. 15 to 17 are cross-sectional SEM images of lithium electrodeposition shapes on copper surfaces after the 20th cycle of the electrolytes according to Comparative Example and Examples 1 and 2, respectively.
FIG. 18 is a comparison result of the Li|NCM811 full cell cycle characteristics according to the electrolyte type.
FIGS. 19 to 21 are charge/discharge voltage graphs according to the cycle progress of batteries using the electrolytes of Comparative Example and Examples 1 and 2.
FIG. 22 shows the results of comparing cycle characteristics according to the composition of the BTFM-based electrolyte at a 3C current density after formation cycles (one cycle of 0.1C, five cycles of 1C, and five cycles of 2C).
FIG. 23 shows the results of comparing the Cu|NCM811 anodeless full cell cycle characteristics according to the type of electrolyte.
FIGS. 24 to 26 are elemental XPS sputter-depth profiles for a negative electrode SEI layer in a Li|NCM811 complete cell using a 1 M LiPF6-EC-EMC electrolyte, which is a comparative example, and O 1s and Li 1s spectra after sputtering of the negative electrode SEI layer for 1 minute.
FIGS. 27 to 29 are elemental XPS sputter-depth profiles for a negative electrode SEI layer in a Li|NCM811 complete cell using a 1 M LiFSI-DME electrolyte, which is a comparative example, and O 1s and Li 1s spectra after sputtering of the negative electrode SEI layer for 1 minute, respectively.
FIGS. 30 to 32 are elemental XPS sputter-depth profiles of the negative electrode SEI layer in the Li|NCM811 full cell of the 1 M LiFSI-7BTFM-1DME electrolyte of Example 1, respectively, and O 1s and Li 1s spectra after sputtering of the negative electrode SEI layer for 1 minute.
FIGS. 33 to 35 are elemental XPS sputter-depth profiles of the negative electrode SEI layer in a Li|NCM811 complete cell using the 2 M LiFSI-3BTFM-1DME electrolyte of Example 2, and O 1s and Li 1s spectra after sputtering of the negative electrode SEI layer for 1 minute, respectively.
FIG. 36 is a graph showing the linear relationship of atomic ratio of Li+O and CE value in SEI layer for BTFM and previously reported electrolyte.
FIG. 37 shows Raman spectrum analysis results for various solvents and electrolytes.
FIGS. 38 and 39 show FT-IR spectrum analysis results for various solvents and electrolytes.

### [Best Mode]

Hereinafter, preferred embodiments of the present invention will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, since the embodiments described in the present specification and the configurations shown in the drawings are only the most preferred embodiments of the present disclosure and do not represent all of the technical ideas of the present disclosure, it should be understood that there may be various equivalents and modifications that may replace them at the time of filing the present application.

Due to the fundamental limitations of the conventional graphite-based anode, lithium metal has been spotlighted as a new anode electrode material for low density, low electrode potential, and extremely high specific capacity.

However, various problems such as thermal instability of a lithium metal anode with respect to an organic solvent represented by carbonate, non-uniform and mechanically weak solid electrolyte interface (SEI) layer, and lithium dendrite formation result in a short cycle life and low Coulombic efficiency.

When a carbonate-based or ether-based electrolyte is used, the RCO2Li-containing SEI layer promotes a large volume change of a lithium anode and causes a mechanical problem. Therefore, in the case of a lithium metal anode (lithium metal anode) other than a graphite anode, it is necessary to develop an additive (co-solvent) of a new electrolyte. In the present specification, the additive is a co-solvent or diluent mixed with an ether-based or carbonate-based solvent, and is referred to as an additive for convenience, but the scope of the present invention is not limited to these terms.

To solve the above-described problem, the present invention provides bis(2,2,2-trifluoroethoxy)methane (BTFM) and bis(2,2,2,3-tetrafluoropropoxy)methane (BTFPM) as an electrolyte additive characterized in that a minimum electrostatic potential (ESP) of the electrolyte additive is -151 kJ mol-1 to -100 kJ mol-1. When these additive is used, a very high Li2O content (63%) can be achieved in the SEI together with a high uniform phase distribution, thereby solving various problems such as thermal instability of the lithium metal anode with respect to the organic solvent, non-uniform and mechanically weak solid electrolyte interface (SEI) layer, lithium dendrite formation, and the like.

The excellent properties of the electrolyte including the additive according to the present invention enable high coulombic efficiency (CE) of 99.72%, which is due to the uniformly distributed high Li2O ratio, as well.

In addition, 90% capacity retention was achieved after 200 cycles in 1C of Li|LiNi0.8Co0.1Mn0.1O2 (NCM811) full cells with a negative/positive capacity (N/P) ratio of 2.5, and 80% capacity retention was achieved after 596 cycles in 3C. It also showed 64% capacity retention after 80 cycles at 1C (1C=1.6mA cm-2) of the complete cell without the Cu|NCM811 anode.

Hereinafter, properties of the electrolyte additive according to the present invention will be described in more detail.

To prepare an electrolyte composition for solving the above-described problems, the present invention calculates and classifies the previously reported minimum electrostatic potential (ESP) values of the solvent and ether-based diluents.

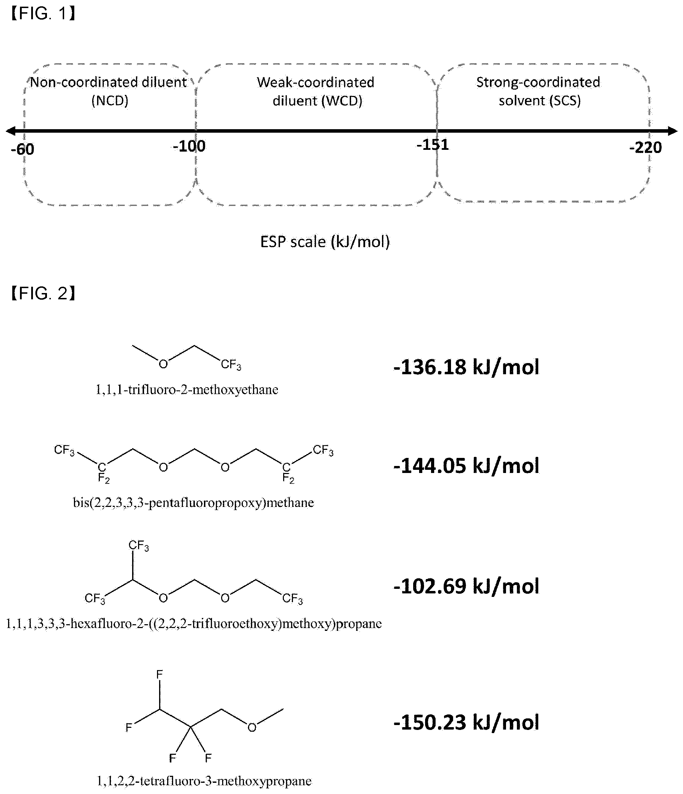

FIG. 1 is a diagram illustrating a method of classifying a minimum electrostatic potential (ESP) value. In the present invention, the term "initial electrostatic potential" refers to a minimum potential at which electrostatic coupling with an electrolyte is possible.

Referring to FIG. 1, existing ether-based diluents including a low electron density (>-100 kJ mol-1) were defined as non-coordinated diluent (NCD) and solvents (strong-coordinated solvent, SCS) exhibiting a high electron density (<-151 kJ mol-1) were classified as strong coordinating diluents.

In the present invention, an ESP range (-151 kJ mol-1 to -100 kJ mol-1) between NCD and SCS is defined as a weak-coordinated diluent (WCD), and a material including an ESP in this range is provided as an additive of an electrolyte of a lithium metal anode-based battery.

Electrolytes including such additives in the ESP range between the NCD and SCS are suitable for achieving optimal anion decomposition for high Li2O content in the SEI. As such additives, the present invention provides bis(2,2,2-trifluoroethoxy)methane (BTFM), which is a fluorinated ether. However, in addition to this, 1,1,1-trifluoro-2-methoxyethane, bis(2,2,3,3,-pentafluoropropoxy)methane, and 1,1,1,3,3,3-hexafluoro-2-((2,2,2-trifluoroethoxy)methoxy)propane are also within the scope of the present invention.

FIG. 2 is a diagram illustrating a minimum electrostatic potential (ESP) of an additive according to an embodiment of the present invention.

Referring to FIG. 2, the electrolyte additive according to an exemplary embodiment of the present invention has an ESP of about 151 kJ mol-1 to about 100 kJ mol-1.

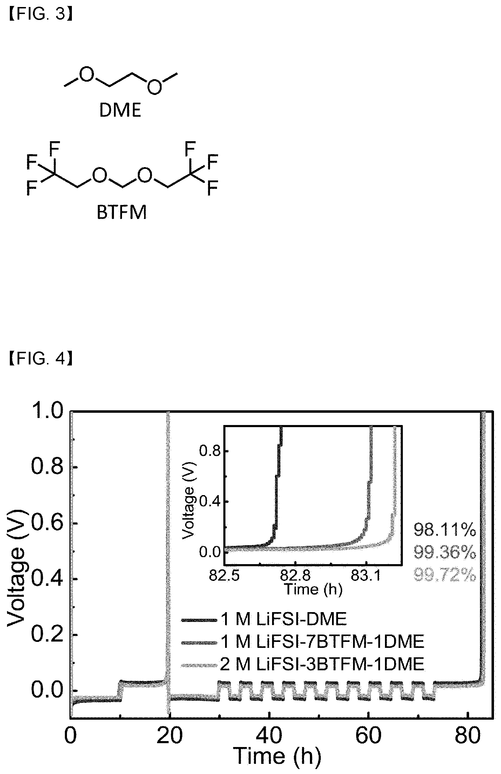

FIG. 3 is a structural diagram of bis(2,2,2-trifluoroethoxy)methane (BTFM), which is an additive, and 1,2-dimethoxyethane (DME), which is a solvent, according to an embodiment of the present invention.

Hereinafter, the present invention will be described by using bis(2,2,2-trifluoroethoxy)methane (BTFM) as an additive component.

### Bis(2,2,2-trifluoroethoxy)methane

In an exemplary embodiment of the present invention, 1M and 2M lithium bis(fluorosulfonyl)imide (LiFSI) were dissolved in a volume ratio of 7:1 or 3:1 to prepare two types of electrolytes (hereinafter, Example 1, Example 2). Each electrolyte all showed excellent battery characteristics and formation of an SEI layer rich in inorganic materials with a high Li2O content.

In an exemplary embodiment of the present invention, the volume ratio of the additive and the solvent may be set according to the concentration of the salt, and in the case of 2M salt, the salt is not dissolved in a region larger than 3:1 (e.g., 4:1), and in the case of 1M, the volume ratio is 8:1 to 1:1. Therefore, the volume ratio of the additive and the solvent may be freely selected at a salt concentration and a level at which the salt of a used concentration may be dissolved, and a level of 8:1 to 1:1 is preferable.

An acetal functional group O-CH2-O was introduced into bis(2,2,2-trifluoroethoxy)methane (O-CH2-CH2-O), which is an electrolyte component according to an embodiment of the present invention, because Li+ affinity is lower than that of BTFM due to a stereophonic effect. Furthermore, the introduction of electron withdrawing groups (-CF3) not only increased high voltage resistance, but also reduced solvating power to achieve WCD.

Both the two types of electrolytes of Example 1 and Example 2 according to an embodiment of the present disclosure exhibited excellent oxidation resistance up to 5.5V. In particular, the 2M LiFSI-3BTFM-1DME electrolyte (Example 2) allowed the formation of inorganic SEI with remarkably high Li2O content, obtaining the highest average CE of 99.72% among the values reported so far in the Li|Cu half-cell.

Some excess Li|NCM811 (LiNi0.8Co0.1Mn0.1O2) complete cells containing a 2M LiFSI-3BTFM-1DME electrolyte with an N/P (negative/positive capacity) ratio of 2.5 exhibited excellent electrochemical performance of 90% capacity.

The capacity retention rate was 90% after 200 cycles at 1 C, and the capacity retention rate was 80% after 596 cycles at 3 C, and the Cu|NCM811 total battery without the anode maintained a 64% retention rate after 80 cycles at 1 C (1C=1.6mA cm-2, 1C=200mA g-1).

Hereinafter, the present invention will be described in more detail with reference to Examples and Experimental Examples.

### [Examples]

### Example 1-1

### Additive synthesis

A solution of 95% concentrated sulfuric acid (90 mL) and paraformaldehyde (18 g) was cooled in an ice bath and 2,2,2-trifluoroethanol (108 g) was quickly added to this solution with stirring. The mixture was then stirred in an ice bath for 10 minutes and at room temperature for 1 hour. After completion of the reaction, the upper layer was separated and poured into ice water, and the mixture was extracted with ether (2 x 100mL) and dried with anhydrous magnesium sulfate. After removal of the ether, the product was collected by vacuum distillation at 35°C. (40 Torr) to synthesize BTFM. Yield: 37%. 1H NMR(400MHz, CDCl3) δH = 4.84(s, 2H), 3.96(q, 4H, J = 8.56Hz) ppm; 19F NMR(376MHz, CDCl3) δF = -74.57(t, J = 8.17Hz, 6F) ppm; 13C NMR(100MHz, CDCl3) δC = 123.62(q, J = 278.03Hz), 95.45(s), 64.99(q, J = 35.21Hz) ppm.

### Example 1-2

### an electrolyte preparation

In the present specification, a case where lithium bis(fluorosulfonyl)imide (LiFSI) of 1 M and 2 M, which are electrolyte salts, is dissolved in BTFM, which is an additive, and DME, which is a solvent, at a volume ratio of 7:1 and 3:1 is referred to as 1 M LiFSI-7BTFM-1DME (Example 1) and 2 M LiFSI-3BTFM-1DME (Example 2).

The additive, BTFM, was dried using a 4Å molecular sieve before use. For 1M LiFSI-7BTFM-1DME electrolyte (Example 1), 150mg of LiFSI was dissolved in 0.7mL BTFM and 0.1mL DME. For 2M LiFSI-3BTFM-1DME electrolyte (Example 2), 374mg of LiFSI was dissolved in 0.75mL BTFM and 0.25mL DME. For 1M LiFSI-DME and 4M LiFSI-DME, 187mg and 748mg LiFSI were dissolved in 1mL DME, respectively. All electrolytes were stirred at ambient temperature in a glove box (O2<0.5ppm, H2O<0.5ppm) for 4 hours.

### Experimental example 1

### Coulombic efficiency

FIG. 4 shows the results of analyzing the coulombic efficiency of an electrolyte (1M LiFSI-DME) in which BTFM as an additive according to the present invention is not mixed, a 1M LiFSI-7BTFM-1DME electrolyte (Example 1) in which BTFM as an additive according to the present invention is added, and a 2M LiFSI-3BTFM-1DME electrolyte (Example 2).

Referring to FIG. 4, the electrolytes according to Examples 1 and 2 show significantly higher coulombic efficiency. In the case of Example 2, it is noteworthy that high coulombic efficiency of 99.72% has shown.

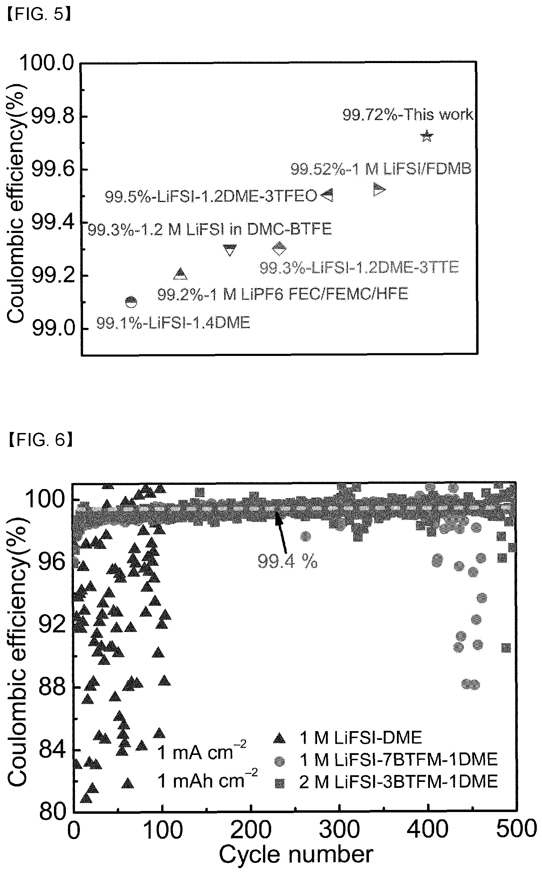

FIG. 5 shows the coulombic efficiency of previously reported electrolytes.

Referring to FIG. 5, the 2 M LiFSI-3BTFM-1DME electrolyte of Example 2 according to the present invention has the highest Coulomb efficiency value of 99.72%.

### Experimental example 2

### Evaluation of half cell cycle characteristics

FIG. 6 shows the results of evaluation of the Li|Cu half-cell cycle characteristics using an electrolyte (1M LiFSI-DME, Comparative Example) without mixing BTFM according to the present invention, a 1M LiFSI-7BTFM-1DME electrolyte (Example 1), and a 2M LiFSI-3BTFM-1DME electrolyte (Example 2) (current density 1 mA cm-2, capacity 1 mAh cm-2).

Referring to FIG. 6, it can be seen that the Li|Cu half-cell using the 2M LiFSI-3BTFM-1DME electrolyte (Example 2) has the highest cycle characteristics with a coulombic efficiency of 99.4% and driving of 500 cycles.

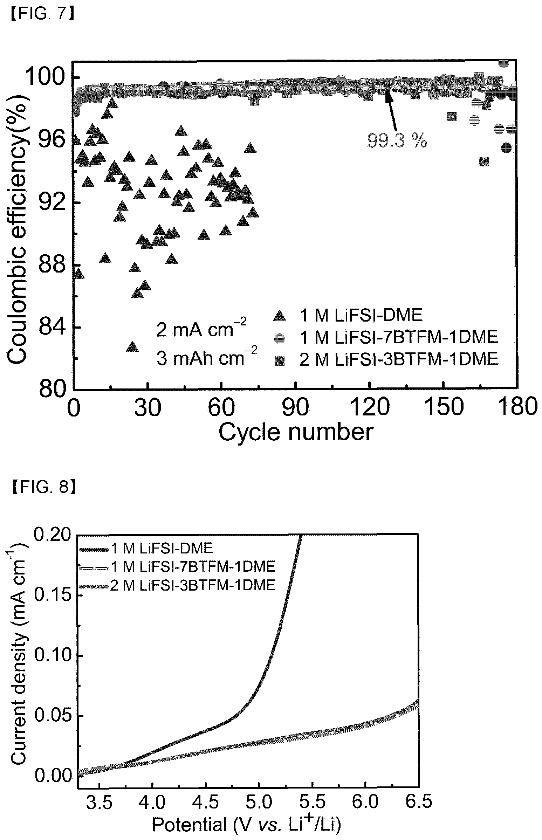

FIG. 7 shows a result of evaluation of cycle characteristics of the half-cell of FIG. 6 under different conditions (current density 2 mA cm-2, capacity 3 mAh cm-2).

Referring to FIG. 7, the BTFM-containing electrolyte composition according to the present invention exhibits improved cycle characteristics compared to the reference electrolyte (1 M LiFSI-DME) with a coulombic efficiency of 99.3% and a 170-cycle operation.

### Experimental example 3

### Oxidation stability evaluation

FIG. 8 shows the evaluation result of oxidation stability in a half cell of Li|Al of three types of electrolytes measured by the linear scanning potential method.

Referring to FIG. 8, it can be confirmed that the electrolytes of Examples 1 and 2 according to the present invention have high oxidation stability of about 5.5 V.

### Experimental example 4

### Surface analysis

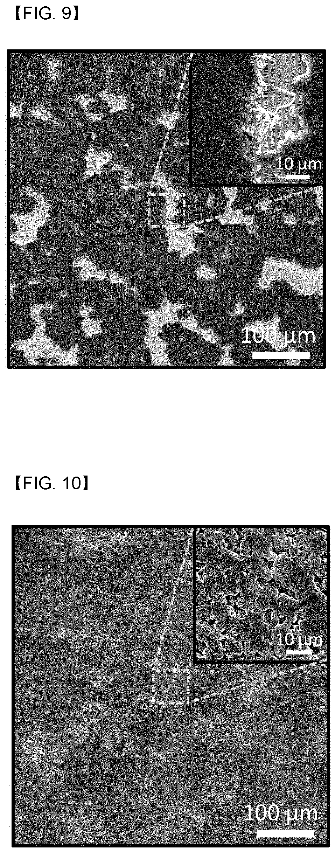

FIGS. 9 to 11 are SEM images of lithium electrodeposition on a copper surface after the first cycle of the electrolytes according to Comparative Example and Examples 1 and 2, respectively.

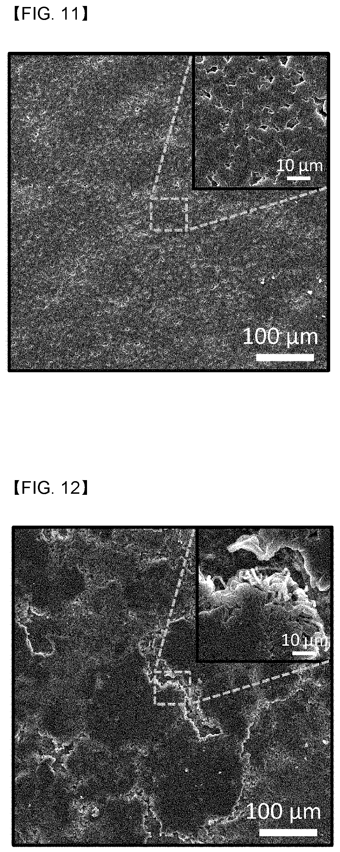

Referring to FIG. 9, a non-uniform lithium electrodeposition shape is shown in a filament form. However, referring to FIGS. 10 and 11, it can be seen that uniform and rounded lithium electrodeposition formation is shown compared to the electrolyte according to the comparative example of FIG. 9.

FIGS. 12 to 14 are SEM images of lithium electrodeposition shapes on copper surfaces after the 20th cycle of the electrolytes according to Comparative Example and Examples 1 and 2, respectively.

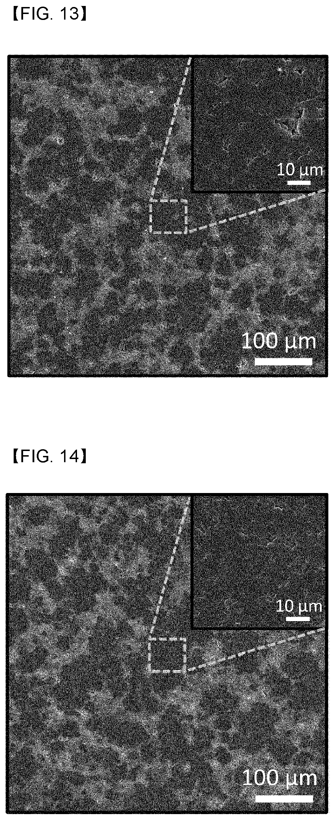

Referring to FIG. 12, as the cycle was repeated, dendritic (dendrite) type lithium was grown, and cracks and the like were confirmed. However, referring to FIGS. 13 and 14, when the electrolyte according to the present disclosure is used after 20 cycles, a uniform and flat lithium electrodeposition shape is shown compared to the comparative example of FIG. 12.

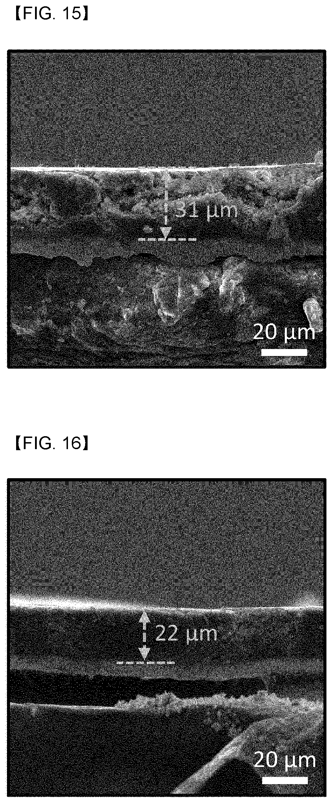

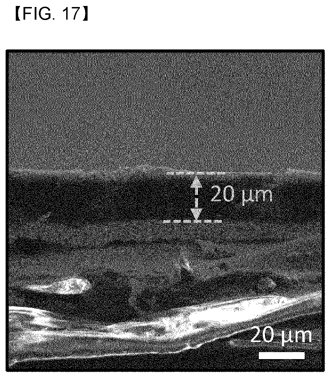

FIGS. 15 to 17 are cross-sectional SEM images of lithium electrodeposition shapes on copper surfaces after the 20th cycle of the electrolytes according to Comparative Example and Examples 1 and 2, respectively.

Referring to FIGS. 15 to 17, it can be confirmed that, when the electrolyte according to the present invention is used as compared to FIG. 15, which is a comparative example, the growth of lithium in a dendritic form is suppressed and uniform lithium electrodeposition is induced during charging/discharging through a low lithium thickness.

### Experimental example 5

### Full cell cycle property analysis

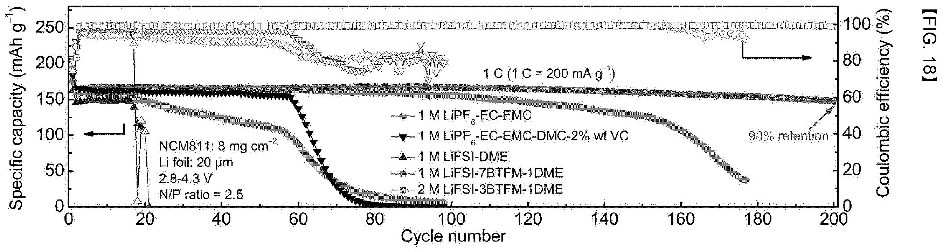

FIG. 18 is a comparison result of the Li|NCM811 full cell cycle characteristics according to the electrolyte type.

Referring to FIG. 18, the electrolyte composition including BTFM according to the present invention shows improved cycle characteristics, and particularly shows 90% capacity retention at 200 cycles of 2M LiFSI-3BTFM-1BME, which is Example 2.

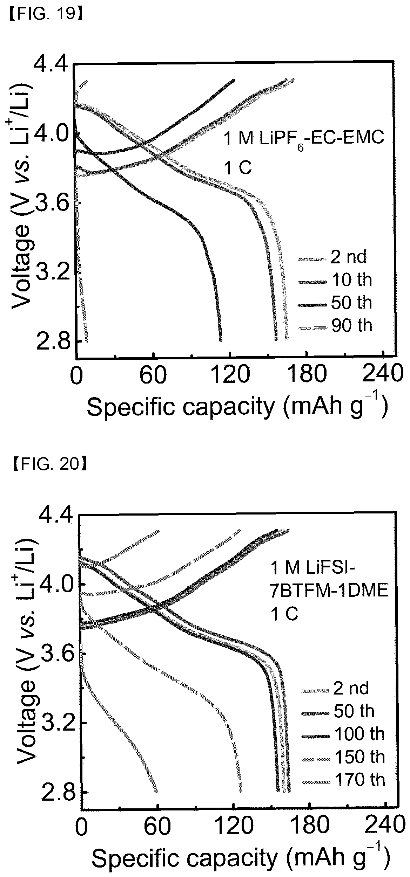

FIGS. 19 to 21 are charge/discharge voltage graphs according to the cycle progress of batteries using the electrolytes of Comparative Example and Examples 1 and 2.

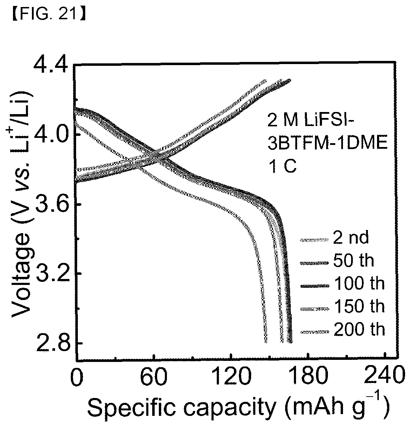

Referring to FIGS. 19 to 21, when the electrolyte additive according to the present invention was used, the polarization in the complete cell was stably maintained due to stable SEI (high Li2O content, etc.) formation and the like (see FIGS. 20 and 21). On the other hand, polarization increases when the carbonate-based electrolyte additive is used, which is due to electrolyte depletion and repeated SEI layer formation (see FIG. 19).

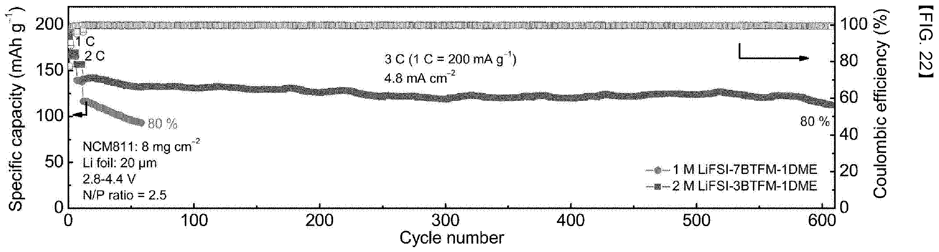

FIG. 22 shows the results of comparing cycle characteristics according to the composition of the BTFM-based electrolyte at a 3C current density after formation cycles (one cycle of 0.1C, five cycles of 1C, and five cycles of 2C).

Referring to FIG. 22, it can be seen that the 2M LiFSI-3BTFM-1DME electrolyte of Example 2 exhibited 80% capacity retention up to 596 cycles and exhibited excellent cycle characteristics.

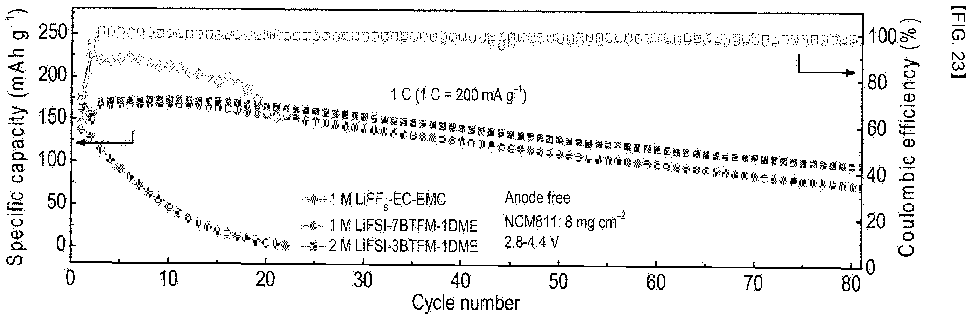

FIG. 23 shows the results of comparing the Cu|NCM811 anodeless full cell cycle characteristics according to the type of electrolyte.

Referring to FIG. 23, it can be seen that the 2M LiFSI-3BTFM-1DME electrolyte of Example 2 exhibited 64% capacity retention up to 80 cycles and exhibited excellent cycle characteristics compared to the 1M LiPF6-EC-EMC electrolyte.

### Experimental example 5

### Component analysis

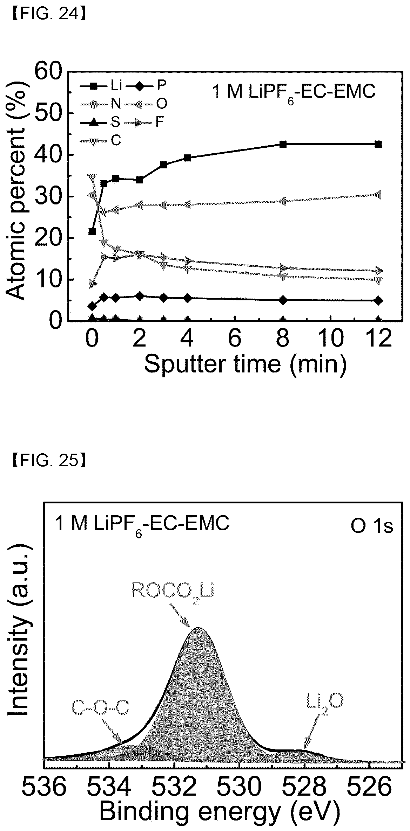

FIGS. 24 to 26 are elemental XPS sputter-depth profiles for a negative electrode SEI layer in a Li|NCM811 complete cell using a 1 M LiPF6-EC-EMC electrolyte, which is a comparative example, and O 1s and Li 1s spectra after sputtering of the negative electrode SEI layer for 1 minute.

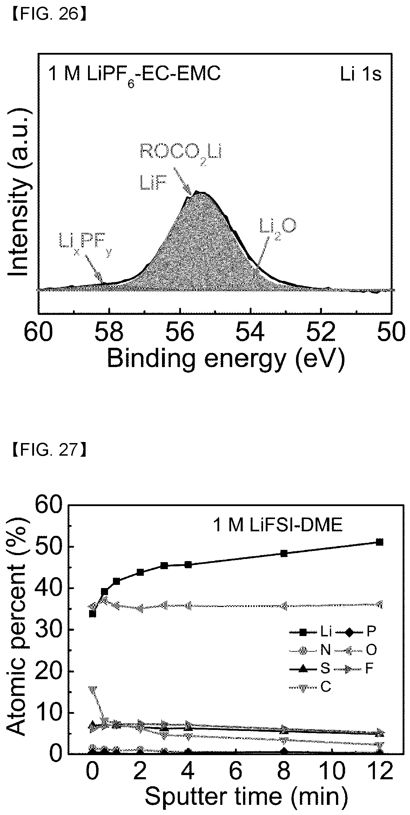

Referring to FIG. 24, the concentration of C is higher than that of the other electrolytes, and the organic component is increased as it goes to the outside of the SEI. In addition, referring to FIGS. 25 and 26, it can be seen that the ratio of Li2O is the lowest and the ratio of ROCO2Li is very high, compared to other electrolytes.

FIGS. 27 to 29 are elemental XPS sputter-depth profiles for a negative electrode SEI layer in a Li|NCM811 complete cell using a 1 M LiFSI-DME electrolyte, which is a comparative example, and O 1s and Li 1s spectra after sputtering of the negative electrode SEI layer for 1 minute, respectively.

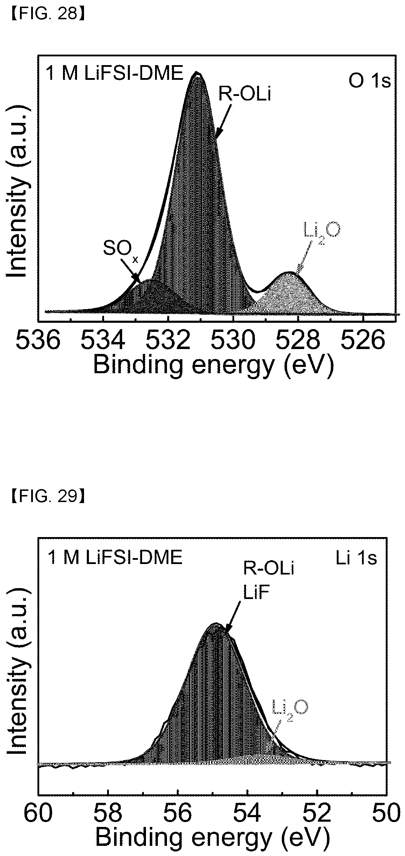

Referring to FIG. 27, the distribution of the inorganic components in the SEI layer is not uniform. In addition, referring to FIGS. 28 and 29, it can be seen that the ratio of Li2O is small.

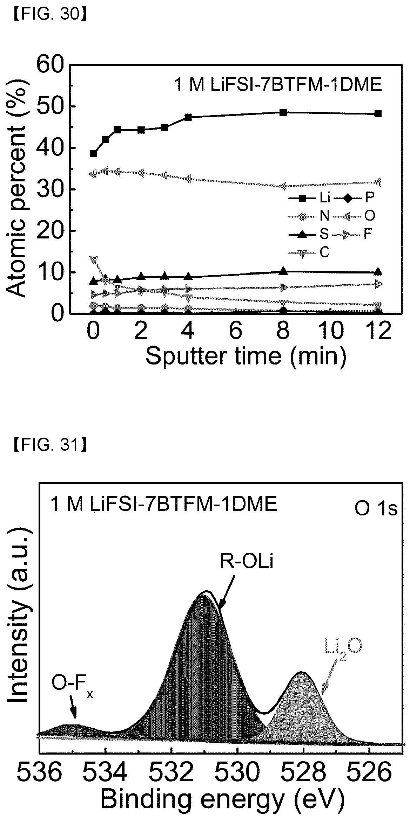

FIGS. 30 to 32 are elemental XPS sputter-depth profiles of the negative electrode SEI layer in the Li|NCM811 full cell of the 1 M LiFSI-7BTFM-1DME electrolyte of Example 1, respectively, and O 1s and Li 1s spectra after sputtering of the negative electrode SEI layer for 1 minute.

Referring to FIGS. 30 to 32, the ratio of Li2O was significantly increased, unlike the complete cell analysis result using the electrolyte according to the comparative example described above. Referring to FIG. 29, it can be seen that the ratio of the inorganic components is constantly maintained in the internal SEI layer, and an SEI layer that is uniform and rich in the inorganic components is formed.

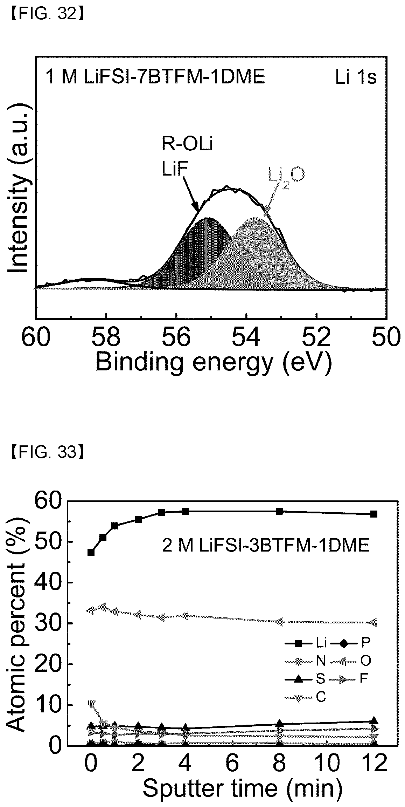

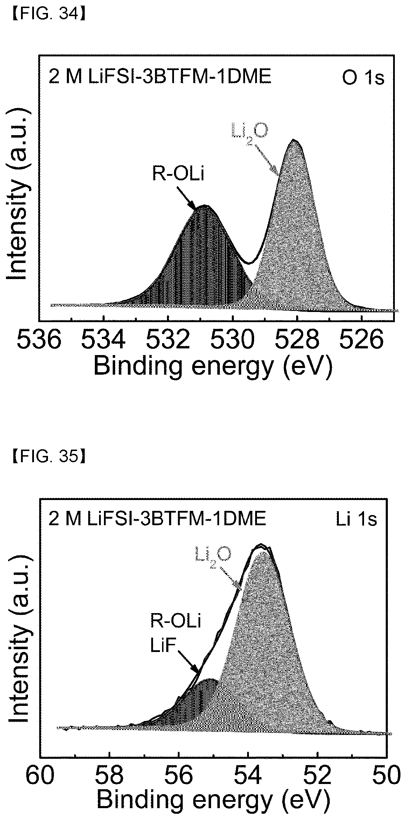

FIGS. 33 to 35 are elemental XPS sputter-depth profiles of the negative electrode SEI layer in a Li|NCM811 complete cell using the 2 M LiFSI-3BTFM-1DME electrolyte of Example 2, and O 1s and Li 1s spectra after sputtering of the negative electrode SEI layer for 1 minute, respectively.

Referring to FIGS. 33 to 35, it can be seen that the ratio of Li2O was significantly increased, unlike the complete cell analysis result using the electrolyte according to the comparative example described above. A higher Li2O ratio could be confirmed than when the additive of Example 1 was used. In addition, referring to FIG. 33, it can be seen that the ratio of the inorganic components in the internal SEI layer is kept constant, and an SEI layer that is uniform and rich in the inorganic components is formed.

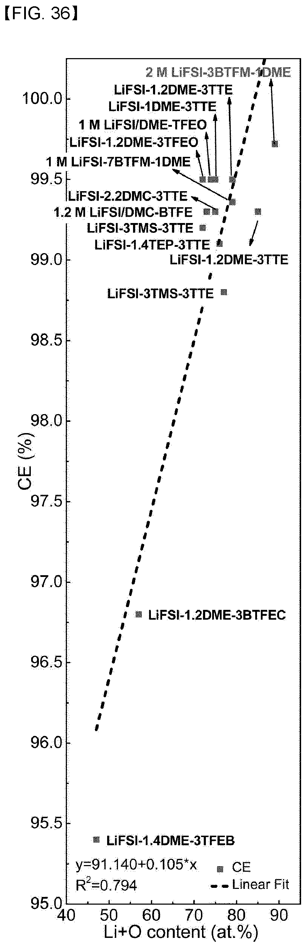

FIG. 36 is a graph showing the linear relationship of atomic ratio of Li+O and CE value in SEI layer for BTFM and previously reported electrolyte.

Referring to FIG. 36, as the ratio of Li2O atoms increases, the CE value also tends to increase, and the 2 M LiFSI-3BTFM-1DME electrolyte of Example 2 has the highest Li+O ratio and CE value.

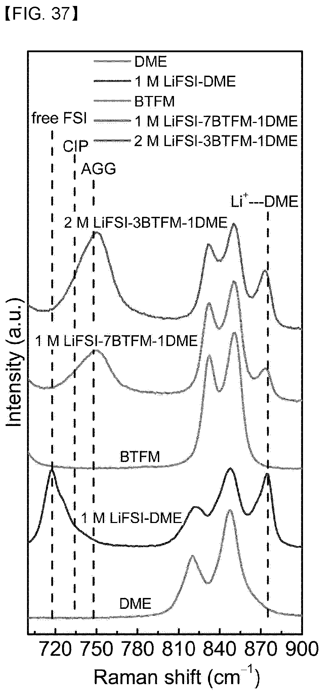

FIG. 37 shows Raman spectrum analysis results for various solvents and electrolytes.

Referring to FIG. 37, unlike the carbonate-based diluent according to the related art, BTFM, which is a weak-coordinated diluent (WCD) according to the present invention, does not interfere with the formation of a high-concentration cluster.

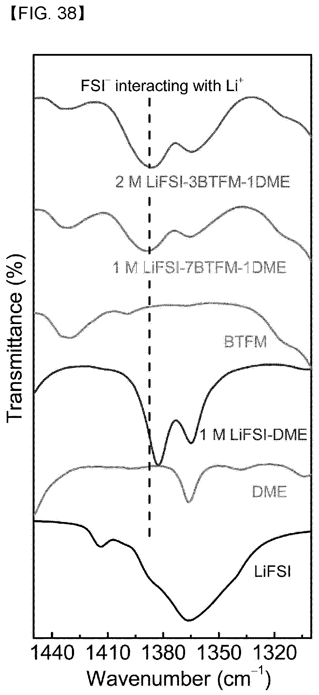

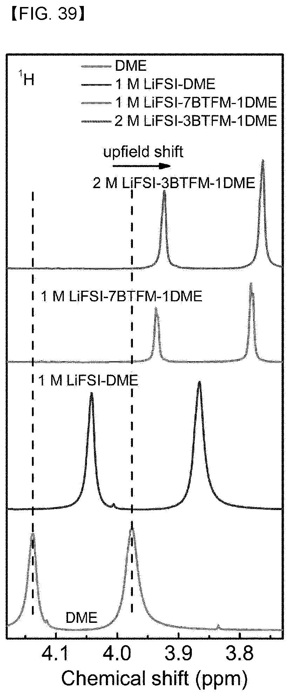

FIGS. 38 and 39 show FT-IR spectrum analysis results for various solvents and electrolytes.

Referring to FIG. 38, in the BTFM-based electrolyte, it can be confirmed that free DME molecules disappear and strong bonds between FSI anions and lithium ions are formed. In addition, referring to FIG. 39, FSI anions and DME around lithium ions form a stronger solvation shell according to the addition of BTFM.

## Claims

1. An electrolyte additive for a lithium-ion battery, wherein the electrolyte additive has a minimum electrostatic potential (ESP) of -151 kJ mol⁻¹ to -100 kJ mol⁻¹.

2. The electrolyte additive for a lithium-ion battery according to claim 1, wherein the anode of the lithium-ion battery comprises a lithium metal.

3. The electrolyte additive for a lithium-ion battery according to claim 1, wherein the electrolyte additive comprises at least one selected from the group consisting of bis(2,2,2-trifluoroethoxy)methane (BTFM), 1,1,1-trifluoro-2-methoxyethane, bis(2,2,3,3,-pentafluoropropoxy)methane, and 1,1,1,3,3,3-hexafluoro-2-((2,2,2-trifluoroethoxy)methoxy)propane.

4. An electrolyte for a lithium-ion battery comprising the electrolyte additive for a lithium-ion battery according to any one of claims 1.

5. The electrolyte for a lithium-ion battery of claim 4, wherein the electrolyte for a lithium-ion battery comprises: the additive according to any one of claims 1; an electrolyte salt; and an ether-based or carbonate-based solvent.

6. The electrolyte for a lithium-ion battery of claim 5, wherein the additive comprises at least one selected from the group consisting of bis(2,2,2-trifluoroethoxy)methane (BTFM), 1,1,1-trifluoro-2-methoxyethane, bis(2,2,3,3-pentafluoropropoxy)methane, and 1,1,1,1,3,3,3-hexafluoro-2-((2,2,2-trifluoroethoxy)methoxy)propane.

7. The electrolyte for a lithium-ion battery of claim 6, wherein a volume ratio of the additive to the solvent is 8: 1 to 1:1.

8. The electrolyte for a lithium-ion battery according to claim 6, wherein the electrolyte salt is lithium bis(fluorosulfonyl)imide (LiFSI).

9. The electrolyte for a lithium-ion battery of claim 8, wherein the anode of the lithium-ion battery is a lithium metal.

10. A lithium-ion battery comprising the electrolyte additive according to any one of claims 1.

11. The lithium-ion battery according to claim 10, wherein the additive is bis(2,2,2-trifluoroethoxy)methane (BTFM).

12. The lithium-ion battery of claim 10, wherein Li₂O is dominant in the SEI layer of the lithium-ion battery.

13. The lithium-ion battery of claim 10, wherein the electrolyte salt of the lithium-ion battery is (lithium bis(fluorosulfonyl)imide (LiFSI)).

14. The lithium-ion battery of claim 10, wherein a solvent of the electrolyte is 1,2-dimethoxyethane (1,2-dimethoxyethane, DME).
